Europäisches Patentamt

European Patent Office

Office européen des brevets

(11) Veröffentlichungsnummer: **0 382 867**
**A1**

## (12) EUROPÄISCHE PATENTANMELDUNG

(21) Anmeldenummer: **89102593.4**

(22) Anmeldetag: **15.02.89**

(51) Int. Cl.5: **H02P 7/62, H02K 21/00**

(43) Veröffentlichungstag der Anmeldung:
**22.08.90 Patentblatt 90/34**

(84) Benannte Vertragsstaaten:
**CH DE ES FR GB IT LI SE**

(71) Anmelder: **Siemens Aktiengesellschaft**
**Wittelsbacherplatz 2**
**D-8000 München 2(DE)**

(72) Erfinder: **Vollmer, Rolf**
**Weiherberg 4**
**D-6416 Poppenhausen(DE)**

(54) **Anordnung zur Steuerung der Drehmomentkonstanten eines dauermagneterregten Drehstrommotors.**

(57) Die Erfindung betrifft eine Anordnung zur Steuerung der Drehmomentkonstante eines dauermagneterregten Drehstrommotors, dessen Ständerwicklung in zwei Teilwicklungen (1 und 2) unterteilt ist, bei welcher Anordnung mittels entsprechender Schaltmittel (9,13,18) die beiden Teilwicklungen (1,2) nach Bedarf entweder in Reihe oder parallel schaltbar sind. Hierdurch wird die Verwendung von dauermagneterregten Drehstrommotoren für Betriebsfälle, die sowohl niedere als auch hohe Drehzahlen erfordern, ermöglicht.

EP 0 382 867 A1

Durch Dauermagnete erregte Drehstrommotoren haben üblicherweise bei einer Auslegung für den Betrieb mit hohen Drehzahlen eine kleine Drehmomentkonstante (Drehmoment bezogen auf den Betriebsstrom) und für den Betrieb mit niederen Drehzahlen eine große Drehmomentkonstante. Bei Anwendungsfällen, die einen Betrieb sowohl mit niederen als auch hohen Drehzahlen erfordern, können wegen der vorbeschriebenen Auslegung der Drehstrommotoren keine dauermagneterregten Drehstrommotoren verwendet werden.

Der Erfindung liegt die Aufgabe zugrunde, eine Verwendung von dauermagneterregten Drehstrommotoren für Betriebsfälle, die sowohl niedere als auch hohe Drehzahlen erfordern zu ermöglichen.

Die Lösung der gestellten Aufgabe besteht in einer Anordnung zur Steuerung der Drehmomentkonstanten eines dauermagneterregten Drehstrommotors, dessen Ständerwicklung in zwei Teilwicklungen unterteilt ist, bei welcher Anordnung mittels entsprechender Schaltmittel die beiden Teilwicklungen nach Bedarf entweder in Reihe oder parallel schaltbar sind.

Die erforderliche Reihen- oder Parallelschaltung der Teilwicklung wird dadurch erreicht, daß die eine Teilwicklung mit ihren einen Wicklungsenden an eine Drehstromquelle angeschlossen und mit ihren anderen Wicklungsenden über ein erstes dreipoliges Schaltelement mit den über ein zweites dreipoliges Schaltelement ebenfalls an die Drehstromquelle anschaltbaren Wicklungsenden der anderen Teilwicklung verbindbar ist, deren andere Wicklungsenden in Stern geschaltet sind, daß ferner ein drittes dreipoliges Schaltelement mit seiner einen Anschlußseite zu dem ersten Schaltelement parallel geschaltet und mit seiner anderen Anschlußseite in Stern geschaltet ist.

Fehlschaltungen werden durch eine Verriegelungsanordnung unterbunden, die einen gleichzeitigen Einschaltbetrieb des ersten Schaltelementes mit dem zweiten und dritten Schaltelement zusammen verhindert.

Sind beide Teilwicklungen des Drehstrommotors identisch ausgebildet, kann der Sternpunkt der einen Teilwicklung im Motor gebildet werden, so daß die entsprechenden Wicklungsenden nicht herausgeführt werden müssen.

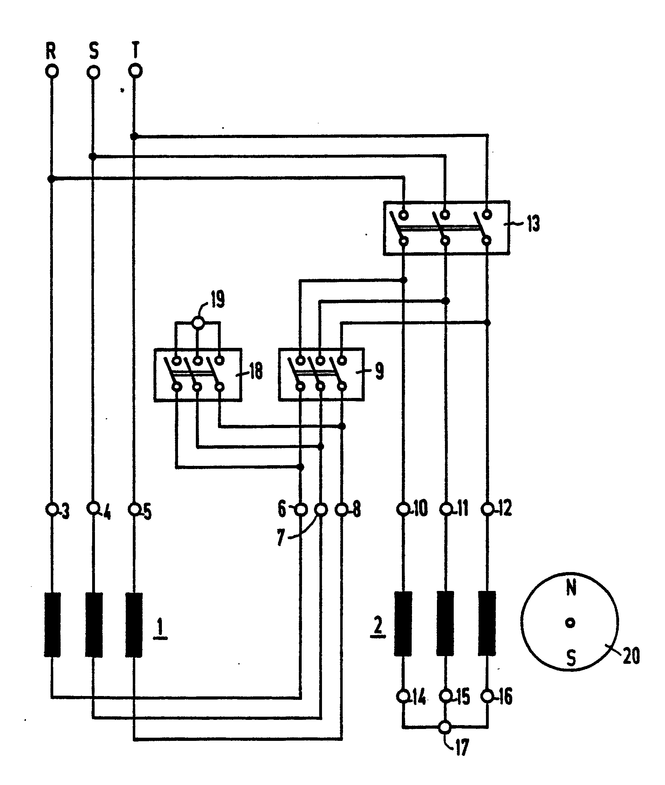

Anhand einer in der Zeichnung dargestellten Schaltungsanordnung wird der Anmeldungsgegenstand nachfolgend näher beschrieben.

Mit R,S,T sind die Klemmen einer steuerbaren Gleichstromquelle, z.B. eines Umrichters bezeichnet. An diese Klemmen R,S,T ist die eine Teilwicklung 1 der Ständerwicklung eines Drehstrommotors mit ihren einen Wicklungsenden 3-5 angeschlossen. Die anderen Wicklungsenden 6-8 dieser Teilwicklung 1 sind über ein erstes dreipoliges Schaltelement 9 an die einen Wicklungsenden 10-12 der anderen Teilwicklung 2 anschaltbar. Diese Wicklungsenden 10-12 sind ferner über ein zweites dreipoliges Schaltelement 13 auch an die Klemmen R,S,T der Drehstromquelle anschaltbar. Die anderen Wicklungsenden 14-15 der anderen Teilwicklung 2 sind in einem Sternpunkt 17 zusammengeführt.

Ein drittes Schaltelement 18 ist mit seiner einen Anschlußseite parallel zum ersten Schaltelement 9 an die anderen Wicklungsenden 6-8 der einen Teilwicklung 1 angeschlossen. Auf der anderen Anschlußseite des dritten Schaltelementes 18 ist ein weiterer Sternpunkt 19 gebildet.

Die drei Schaltelemente 9,13 und 18, welche aus mechanischen Schaltern oder aus Halbleitern bestehen können, sind derart gegeneinander verriegelt, daß entweder nur das erste Schaltelement 9 allein oder das zweite und dritte Schaltelement 13 und 18 zusammen im Einschaltbetrieb sein können. Ein gleichzeitiger Einschaltbetrieb aller drei Schaltelemente 9,13 und 18 ist somit nicht möglich.

Ist für einen bestimmten Betriebsfall eine niedere Drehzahl und eine hohe Drehmomentkonstante erforderlich, so werden durch Einschalten des ersten Schaltelementes 9 beide Teilwicklungen 1 und 2 in Reihe geschaltet. Hierdurch ergeben sich für den Drehstrommotor, dessen dauermagneterregter Läufer mit 20 angedeutet ist, die gewünschten Betriebsgrößen hinsichtlich Drehzahl und Drehmomentkonstante.

Erfordert ein anderer Betriebsfall eine hohe Drehzahl und eine niedere Drehmomentkonstante, dann können diese Größen durch Einschalten des zweiten und dritten Schaltelementes 13 und 18 erreicht werden. Durch ein solches Einschalten der beiden Schaltelemente 13 und 18 werden nämlich die beiden Teilwicklungen 1 und 2 parallel an die Klemmen R,S,T der Drehstromquelle geschaltet. Eine solche Parallelschaltung der beiden Teilwicklungen 1 und 2 ermöglicht eine hohe Drehzahl des Drehstrommotors bei niederer Drehmomentkonstante.

Mit Hilfe der beschriebenen Schaltungsanordnung wird somit der Einsatz von dauermagneterregten Drehstrommotoren auch dort ermöglicht, wo ansonsten wegen der Betriebserfordernisse nur elektrisch erregte Drehstrommotoren oder Motoren mit nachgeschaltetem Getriebe eingesetzt werden konnten.

## Ansprüche

1. Anordnung zur Steuerung der Drehmomentkonstanten eines dauermagneterregten Drehstrommotors, dessen Ständerwicklung in zwei Teilwicklungen (1 und 2) unterteilt ist, bei welcher Anordnung mittels entsprechender Schaltmittel (9,13,18) die beiden Teilwicklungen (1 und 2) nach Bedarf entweder in Reihe oder parallel schaltbar sind.

2. Anordnung nach Anspruch 1, bei der die eine Teilwicklung (1) mit ihren einen Wicklungsenden (3-5) an eine Drehstromquelle (R,S,T) angeschlossen und mit ihren anderen Wicklungsenden (6-8) über ein erstes dreipoliges Schaltelement (9) mit den über ein zweites dreipoliges Schaltelement (13) ebenfalls an die Drehstromquelle (R,S,T) anschaltbaren Wicklungsenden (10-12) der anderen Teilwicklung (2) verbindbar ist, deren andere Wicklungsenden (14-16) in Stern (17) geschaltet sind, daß ferner ein drittes dreipoliges Schaltelement (18) mit seiner einen Anschlußseite zu dem ersten Schaltelement (9) parallel geschaltet und mit seiner anderen Anschlußseite in Stern (19) geschaltet ist.

3. Anordnung nach Anspruch 2, bei der durch eine Verriegelungsanordnung ein gleichzeitiger Einschaltbetrieb des ersten Schaltelementes (9) mit dem zweiten und dritten Schaltelement (13 und 18) unterbunden ist.

4. Anordnung nach Anspruch 3, bei der die Teilwicklungen (1 und 2) identisch ausgebildet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-205877 (SIEMENS AG)<br>* Zusammenfassung; Figur 1 *<br>--- | 1 | H02P7/62<br>H02K21/00 |
| A | DE-A-1563389 (SIEMENS AG)<br>* Anspruch 5 *<br>--- | 1 | |
| A | DE-B-1076802 (HANSA-MOTORENFABRIK)<br>* Ansprüche 5-8; Figur 2 *<br>----- | 1 | |

| RECHERCHIERTE SACHGEBIETE (Int. Cl.5 ) |
|---|
| H02P<br>H02K |

Der vorliegende Recherchenbericht wurde für alle Patentansprüche erstellt

| Recherchenort | Abschlußdatum der Recherche | Prüfer |
|---|---|---|
| DEN HAAG | 13 OKTOBER 1989 | BEYER F. |